Europäisches Patentamt

European Patent Office

Office européen des brevets

(11) Publication number: **0 077 423**
**B1**

# EUROPEAN PATENT SPECIFICATION

(45) Date of publication of patent specification: **12.03.86**

(21) Application number: **81304902.0**

(22) Date of filing: **20.10.81**

(51) Int. Cl.⁴: **G 01 D 5/245**

(54) **Length measuring devices.**

(43) Date of publication of application:
**27.04.83 Bulletin 83/17**

(45) Publication of the grant of the patent:
**12.03.86 Bulletin 86/11**

(84) Designated Contracting States:
**DE FR GB**

(56) References cited:
**FR-A-2 030 713**
**GB-A-1 302 762**
**US-A-4 028 603**

(73) Proprietor: **SONY CORPORATION**
**7-35 Kitashinagawa 6-Chome Shinagawa-ku**
**Tokyo 141 (JP)**

(73) Proprietor: **TOYOTA JIDOSHA KABUSHIKI**
**KAISHA**
**1, Toyota-cho Toyota-shi**
**Aichi-ken 471 (JP)**

(72) Inventor: **Ohkubo, Hiroyuki**
**4-16-5 Masago**
**Chiba-shi Chiba-ken (JP)**
Inventor: **Maru, Hiroshi**
**1-177 Amanuma-cho**
**Oomiya-shi Saitama-ken (JP)**
Inventor: **Kato, Yoshito**
**105-120 Aza-Fujitsuka Ooazaorito, Nisshin-cho**
**Aichi-gun Aichi-ken (JP)**
Inventor: **Hashimoto, Toshio**
**2-3-141 Nomiyama-cho**
**Toyota-shi Aichi-ken (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to length measuring devices in which a detecting head cooperates with a magnetic grating.

Length measuring devices using a magnetic scale formed as a magnetic grating generally operate incrementally. See, for example, French patent specification FR—A—2 030 713. That is, pulses obtained for each unit displacement of a detecting head relative to a magnetic scale are counted cumulatively to derive the measurement value. A length measuring device based on this incremental system is simple in construction and inexpensive. On the demerit side, however, the past positional information is entirely lost if the power supply is lost. It is therefore preferable to provide some means of sensing origin information. See, for example, UK patent specification GB—A—1·302 762. In addition, iron particles and other unwanted particles are likely to accumulate on the surface of magnetic scale, and if such particles are caught between the magnetic scale and the detecting head which is moved in close proximity to the magnetic scale, they may cause damage to the detecting head and to the magnetic scale. Pads and lips for cleaning information tapes are, of course, known. See, for example, US patent specification US—A—4 028 603.

According to the present invention there is provided a length measuring device comprising:
a scale base;
an origin signal member;
a measurement signal member which forms a grating;
a surface on which a detecting head body is movable longitudinally over said signal members;
an origin detecting head for deriving an origin signal from said origin signal member; and
a measurement detecting head for deriving a measurement signal from said measurement signal member;
characterised in that:
said origin signal member is a magnetic member set in said scale base;
said measurement signal member is a magnetic member;
said surface is a uniform frictional surface;
said detecting head body comprises a head case which encloses said detecting heads; and
the leading and trailing ends of said head case in respect of longitudinal movement of said head case relative to said scale base carry respective scrapers which are in elastic contact with said frictional surface.

The invention will now be described by way of example with reference to the accompanying drawings, in which:

Figures 1 and 2 show plan and longitudinal section views respectively of a first embodiment of length measuring device according to the invention;

Figures 3 and 4 show plan and longitudinal section views respectively of a second embodiment of length measuring device according to the invention;

Figure 5 is a partly broken-away perspective view showing a modification of a magnetic scale body used in an embodiment; and

Figure 6 is a plan view of a different modification of the magnetic scale body.

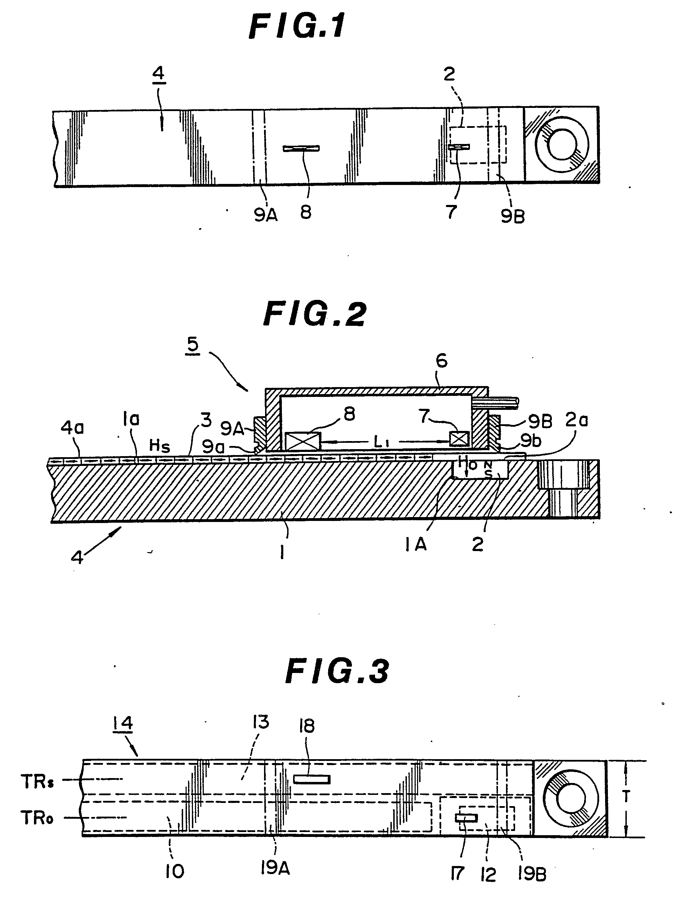

Figures 1 and 2 show the first embodiment, in which a magnetic grating is formed by a transverse magnetic recording. A magnetic scale body 4 includes a scale base 1, in which an origin signal magnetic member 2 is buried, and one surface 1a of the scale base 1 inclusive of the top surface 2a of the origin signal magnetic member 2 is covered by a measurement signal magnetic member 3.

The scale base 1 is made of a non-magnetic material and is formed near one end thereof with a recess 1A, in which the origin signal magnetic member 2 is buried. The origin signal magnetic member 2 is made of a rare earth element magnet, a rubber magnet or a plastics magnet, and generates a magnetic field $H_O$ as an origin signal in the direction perpendicular to the surface 1a. The measurement signal magnetic member 3 is formed by a rolled magnet made of spinodal magnetic material such as CU.Ni.Fe or CU.Ni.Co, and . is magnetized to provide a magnetic grating such that a surface field measurement signal is generated by transverse magnetic recording parallel to a plane-finished frictional surface 4a. The rolled magnet forming the measurement signal magnetic member 3 has a magnetic permeability of from one to three, and the signal field for the origin is not spoiled by covering the top surface 2a of the origin signal magnetic member 2. The magnetic grating of the measurement signal magnetic member 3 may be formed up to a position just covering the origin signal magnetic member 2.

A detecting head body 5, which is movable relative to the magnetic scale body 4, includes a head case 6, which accommodates an origin detecting head 7 and a measurement detecting head 8, the heads 7 and 8 being spaced apart a predetermined distance $L_1$. Scrapers 9A and 9B are mounted on the opposite side walls 6a and 6b of the head case 6. The scrapers 9A and 9B are made of an elastic material such as polyurethane or nitrile rubber. The scrapers 9A and 9B have respective sharp edges 9a and 9b, which are in elastic contact with the frictional surface 4a of the measurement signal magnetic member 3. As the detecting head body 5 is moved relative to the magnetic scale body 4, the edges 9a and 9b are also moved in frictional contact with the frictional surface 4a to remove iron or other particles deposited on the frictional surface 4a. The origin detecting head 7 is formed by a magnetic switch making use of a ferromagnetic magnetic reluctance effect element, and is secured with a comparatively large clearance relative to the frictional surface 4a of the magnetic scale body 4. The measurement detecting head 8 comprises a multigap magnetic head of a magnetic flux response type or a magnetic sensor based upon the ferromagnetic magnetic reluctance effect. It is disposed and moved in elastic contact with the frictional surface 4a with the movement of the detecting head body 5 with respect to the magnetic scale body 4.

This embodiment is most suitably used as a high resolution length measurement device, in which a magnetic grating of a comparatively short wavelength of 2 mm or less is formed by lateral magnetic field recording in the measurement signal magnetic member 3 of the magnetic scale body 4. The magnetic field $H_O$ from the origin signal magnetic member 2 is detected as origin signal information by the origin detecting head 7, and the signal field $H_S$ from the measurement signal magnetic member 3, that is the measurement position information, is detected by the measurement detecting head 8, and may be used to derive absolute position information based upon the original position information. In addition, the frictional surface 4a of the magnetic scale body 4 is cleaned by the scrapers 9A and 9B, so that it is possible to provide a length measurement device which can withstand use even in a dirty operational environment where iron particles are present.

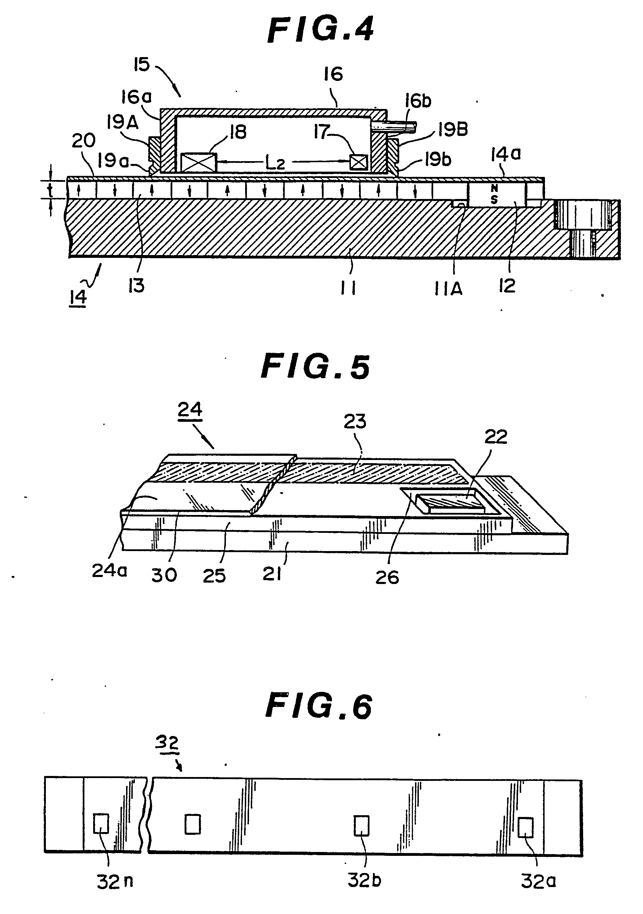

Figures 3 and 4 show the second embodiment, in which the magnetic grating is formed by longitudinal magnetic recording. A magnetic scale body 14 includes a scale base 11, an origin signal magnetic member 12 and a measurement signal magnetic member 13 formed thereon, and a protective layer 20 consisting of a non-magnetic material formed over the entire top surface of the magnetic members 12 and 13. In this embodiment, an origin track $TR_O$, in which the origin signal magnetic member 12 is disposed, and a measurement track $TR_S$, in which the measurement signal magnetic member 13 is disposed, are formed on the magnetic scale body 14.

A detecting head body 15 includes a head case 16 housing an origin detecting head 17 and a measurement detecting head 18 for respectively tracing the tracks $TR_O$ and $TR_S$, the heads 17 and 18 being spaced apart a predetermined distance $L_2$. The origin signal magnetic member 12 and the measurement signal magnetic member 13 are made of rubber magnet or barium ferrite which is comparatively readily available. The scale base 11 is made of a magnetic material in order to reinforce the signal field $H_S$ formed by the measurement signal magnetic member 13.

In a portion of the origin track $TR_O$ exclusive of the origin signal magnetic member 12, a spacer 10 having substantially the same thickness $t$ as the measurement signal magnetic member 13 is interposed between the scale base 11 and the protective layer 20.

In this embodiment, the scale base 11 is formed with a recess 11A for accommodating the origin signal magnetic member 12, while the spacer 10 which is made of a magnetic plate is used together with the measurement signal magnetic member 13 for accurate matching of the thickness

$t$ of the magnetic member 13 and the spacer 10 and also to provide uniform finish of the upper surface of the protective layer 20.

The detecting head body 15, which includes the origin detecting head 17 and the measurement detecting head 18 for tracing the respective tracks $TR_O$ and $TR_S$ of the magnetic scale body 14, has opposite side walls 16a and 16b of the head case 16 provided with scrapers 19A and 19B having respective sharp edges 19a and 19b having a width T extending across both the individual tracks $TR_O$ and $TR_S$.

In this embodiment, a magnetic grating of a comparatively long wavelength of 1 mm or more is formed by longitudinal magnetic recording in the measurement signal magnetic member 13. Thus, it can most suitably be used as a length measuring device having a comparatively low resolution. Also, by setting the wavelength of the magnetic grating to be comparatively large, a large clearance between the measurement signal magnetic member 13 and the measurement detecting head 18 may be used, and also the thickness of the protective layer 20 on the surface of the magnetic scale body 14 can be sufficiently accommodated within the range of clearance.

Also in this embodiment, a frictional surface 14a of the magnetic scale body 14 is a uniformly finished plane surface. Thus, it is possible to obtain sufficient cleaning effect by the scrapers 19A and 19B. In addition, it is possible to derive and absolute length measurement output on the basis of the information of the point of origin.

The spacer 10 may be formed on a common magnetic plate integral with the measurement signal magnetic member 13. Figure 5 shows a modification of the magnetic scale device utilizing a magnetic grating formed by the longitudinal magnetic recording as described above. This modification provides a magnetic scale body 24 having a structure comprising a scale base 21, a magnetic plate 25 made of barium ferrite and a protective layer 30 made of a non-magnetic sheet. The magnetic grating formed by longitudinal recording is selectively provided in a region of the magnetic plate 25 corresponding to the measurement track $TR_S$, and thus the measurement signal magnetic member 23 is formed. The magnetic plate 25 is formed in a region corresponding to the origin track $TR_O$ with a recess defining an accommodating section 26 for an origin signal magnetic member 22. The origin signal magnetic member 22 is received and secured in the accommodating section 26 formed in the magnetic plate 25 on the scale base 21. The protective layer 30 is provided to cover the entire surface of the magnetic plate 25 and the origin signal magnetic member 30, whereby a uniformly finished plane surface can be provided as a frictional surface 24a of the magnetic scale body 24.

While in the above embodiments a single origin signal magnetic member is arranged on the scale base, it is also possible to apply the invention to a length measuring device as shown in Figure 6, in which a magnetic scale body 32 including a plurality of origin signal magnetic members 32a, 32b,...32n providing information of respective predetermined positions, is used to obtain a length measurement output based upon the information of the individual origin points.

## Claims

1. A length measuring device comprising:
a scale base (1, 11, 21);
an origin signal member (2, 12, 22, 32a);
a measurement signal member (3, 13, 23) which forms a grating;
a surface (4a, 14a, 24a) on which a detecting head body (5, 15) is movable longitudinally over said signal members (2, 12, 22, 3, 13, 23);
an origin detecting head (7, 17) for deriving an origin signal from said origin signal member (2, 12, 22); and
a measurememnt detecting head (8, 18) for deriving a measurement signal from said measurement signal member (3, 13, 23);
characterised in that:
said origin signal member (2, 12, 22, 32a) is a magnetic member (2, 12, 22, 32a) set in said scale base (1, 11, 21);
said measurement signal member (3, 13, 23) is a magnetic member (3, 13, 23);
said surface (4a, 14a, 24a) is a uniform frictional surface (4a, 14a, 24a);
said detecting head body (5, 15) comprises a head case (6, 16) which encloses said detecting heads (7, 8; 17, 18); and
The leading and trailing ends of said head case (6, 16) in respect of longitudinal movement of said head case (6, 16) relative to said scale base (1, 11, 21) carry respective scrapers (9A, 9B; 19A, 19B) which are in elastic contact with said frictional surface (4a, 14a, 24a).

2. A length measuring device according to claim 1 wherein said measurement signal magnetic member (3) is formed by transverse magnetic recording, and said scale base (1) is made of non-magnetic material.

3. A length measuring device according to claim 1 wherein said measurement signal magnetic member (13) is formed by longitudinal magnetic recording, and said scale base (11) is made of magnetic material.

4. A length measuring device according to claim 1, claim 2 or claim 3 wherein said frictional surface (14a, 24a) is formed on a protective layer (20, 30) of non-magnetic material overlying said signal magnetic members (12, 13; 22, 23).

5. A length measuring device according to claim 1 wherein said origin signal magnetic member (12) forms an origin track (TR$_O$) and said measurement signal magnetic member (13) forms a measurement track (TR$_S$).

6. A length measuring device according to claim 1 comprising a plurality of said origin signal magnetic members (32a, 32b,...32n).

## Patentansprüche

1. Längenmeßgerät mit einer Skalenbasis (1, 11, 21), einem Ursprungssignalglied (2, 12, 22, 32a) einem Meßsignalglied (3, 13, 23), welches ein Gitter bildet, einer Oberfläche (4a, 14a, 24a), auf welcher ein Abtastkopfkörper (5, 15) in Längsrichtung über die Signalglieder (2, 12, 22, 3, 13, 23) verschiebbar ist, einem Ursprungsabtastkopf (7, 17) zur Ableitung eines Ursprungssignals von dem Ursprungssignalglied (2, 12, 22) sowie einem Meßabtastkopf (8, 18) zur Ableitung eines Meßsignals von dem Meßsignalglied (3, 13, 23),
dadurch gekennzeichnet, daß das Ursprungssignalglied (2, 12, 22, 32a) ein in die Skalenbasis (1, 11, 21) eingesetztes Magnetglied (2, 12, 22, 32a) ist, das Meßsignalglied (3, 13, 23) ein Magnetglied (3, 13, 23) ist, die oberfläche (4a, 14a, 24a) eine gleichförmige Reibungsfläche (4a, 14a, 24a) ist, der Abtastkopfkörper (5, 15) ein Kopfgehäuse (6, 16) umfaßt, welches die Abtastköpfe (7, 8; 17, 18) umschließt, und das vordere und das hintere Ende des Kopfgehäuses (6, 16) in Bezug auf die Längsbewegung des Kopfgehäuses (6, 16) relativ zu der Skalenbasis (1, 11, 21) jeweilige Schaber (9A, 9B; 19A, 19B) tragen, welche mit der Reibungsfläche (4a, 14a, 24a) in elastischem Kontakt stehen.

2. Längenmeßgerät nach Anspruch 1, dadurch gekennzeichnet, daß das Meßsignal-Magnetglied (3) gebildet ist durch quergerichtete magnetische Aufzeichnung und die Skalenbasis (1) aus nichtmagnetischem Material besteht.

3. Längenmeßgerät nach Anspruch 1, dadurch gekennzeichnet, daß das Meßsignal-Magnetglied (13) gebildet ist durch längsgerichtete magnetische Aufzeichnung und die Skalenbasis (11) aus magnetischem Material besteht.

4. Längenmeßgerät nach Anspruch 1, 2 oder 3, dadurch gekennzeichnet, daß die Reibungsfläche (14a, 24a) auf einer Schutzschicht (20, 30) aus nichtmagnetischem Material ausgebildet ist, welche die Signal-Magnetglieder (12, 13; 22, 23) überdeckt.

5. Längenmeßgerät nach Anspruch 1, dadurch gekennzeichnet, daß das Ursprungssignal-Magnetglied (12) eine Ursprungsspur (TR$_O$) bildet und das Meßsignal-Magnetglied (13) eine Meßspur (TR$_S$) bildet.

6. Längenmeßgerät nach Anspruch 1, gekennzeichnet durch mehrere Ursprungssignal-Magnetglieder (32a, 32b...32n).

## Revendications

1. Dispositif de mesure de longueur comprenant:
une base de support d'échelle (1, 11, 21);
un élément (2, 12, 22, 32a) fournissant un signal d'origine;
un élément (3, 13, 23) qui forme un réseau, fournissant un signal de mesure;
une surface (4a, 14a 24a) sur laquelle un corps (5, 15) pour têtes détectrices peut être déplacé longitudinalement au-dessus desdits éléments (2, 12, 22, 3, 13, 23) fournissant lesdits signaux;

une tête (7, 17) de détection d'origine servant à produire un signal d'origine à partir dudit élément (2, 12, 22) fournissant un signal d'origine; et

une tête (8, 18) de détection de mesure servant à produire un signal de mesure à partir dudit élément (3, 13, 23) fournissant le signal de mesure;

caractérisé en ce que:

ledit élément (2, 12, 22, 32a) fournissant le signal d'origine est un élément magnétique fixé dans ladite base de support d'échelle (1, 11, 21);

ledit élément (3, 13, 23) fournissant le signal de mesure est un élément magnétique;

ladite surface (4a, 14a, 24a) est une surface de frottement uniforme;

ledit corps (5, 15) pour têtes détectrices comprend un boîtier de têtes (6, 16) qui renferme lesdites têtes détectrices (7, 8; 17, 18); et

les extrémités dudit boîtier de têtes (6, 16) respectivement situées en avant et en arrière par rapport au déplacement longitudinal dudit boîtier de têtes vis-à-vis de ladite base de support d'échelle (1, 11, 21) portent respectivement des raclettes (9A, 9B; 19A, 19B) qui sont en contact élastique avec ladite surface de frottement (4a, 14a, 24a).

2. Dispositif de mesure de longueur selon la revendication 1, où ledit élément magnétique (3) fournissant le signal de mesure est formé par enregistrement magnétique transversal, et ladite base de support d'échelle (1) est faite en un matériau non magnétique.

3. Dispositif de mesure de longueur selon la revendication 1, où ledit élément magnétique (13) fournissant le signal de mesure est formé par enregistrement magnétique longitudinal, et ladite base de support d'échelle (11) est faite d'un matériau magnétique.

4. Dispositif de mesure de longueur selon la revendication 1, 2 ou 3, où ladite surface de frottement (14a, 24a) est formée sur une couche protectrice (20, 30) faite d'un matériau non magnétique s'étendant sur lesdits éléments magnétiques (12, 13; 22, 23) fournissant les signaux.

5. Dispositif de mesure de longueur selon la revendication 1, où ledit élément magnétique (12) fournissant le signal d'origine forme une piste d'origine $(TR_O)$ et ledit élément magnétique (13) fournissant le signal de mesure forme une piste de mesure $(TR_S)$.

6. Dispositif de mesure de longueur selon la revendication 1, comprenant plusieurs desdits éléments magnétiques (32a, 32b,...32) fournissant des signaux d'origine.

# FIG.1

# FIG.2

# FIG.3

## FIG.4

## FIG.5

## FIG.6